# EUROPÄISCHE PATENTSCHRIFT

(11) **EP 3 593 203 B1**
(45) Veröffentlichungstag und Bekanntmachung des Hinweises auf die Patenterteilung: **16.06.2021**
(21) Anmeldenummer: 18712102.5
(22) Anmeldetag: 07.03.2018
(51) Int. Cl.: G02C 5/18, G02C 5/22

(54) **BRILLE**
EYEGLASSES
LUNETTES

(30) Priorität: 09.03.2017 AT 501842017
(43) Veröffentlichungstag der Anmeldung: 15.01.2020
(73) Patentinhaber: Pocket Sky OG, 1020 Wien (AT)
(72) Erfinder: GEYER, Michael, 1120 Wien (AT); WALLERBERGER, Mark, 1030 Wien (AT)
(74) Vertreter: KLIMENT & HENHAPEL
(86) Internationale Anmeldenummer: PCT/EP2018/055630
(87) Internationale Veröffentlichungsnummer: WO 2018/162567

(56) Entgegenhaltungen:
- EP-A1- 2 226 672
- EP-A1- 3 118 670
- DE-A1-102004 027 013
- DE-U1- 8 527 033
- DE-U1-202016 002 203
- US-A1- 2005 275 795
- US-A1- 2016 266 402

## Beschreibung

Die Erfindung betrifft eine Brille mit zwei Bügeln, die jeweils über eine Schwenkverbindung an einem in Gebrauchslage das Sichtfeld bedeckenden, optischen Mittelteil angelenkt sind und von einem Lagerungszustand, in dem die Bügel am optischen Mittelteil angelegt sind, in einen Gebrauchszustand, in dem die Bügel vom Mittelteil ausgeklappt sind, schwenkbar sind, wobei der optische Mittelteil aus einem biegeelastischen Material gefertigt ist, gemäß dem Oberbegriff von Anspruch 1.

Brillen dieser Art mit einem optischen Mittelteil, der aus einem biegeelastischen Material gefertigt ist, dienen etwa dazu die Intensität des in das Auge des Trägers einstrahlenden Lichtes insgesamt zu verringern, oder hinsichtlich ausgewählter Frequenzbereiche zu verringern. Beispiele sind etwa Sonnenbrillen oder Gelbfilterbrillen. Hier sind zur Fertigung des in Gebrauchslage das Sichtfeld bedeckenden, optischen Mittelteils spezielle Kunststoffe bekannt, die etwa Licht im ultravioletten Frequenzbereich schwächen wie bei Sonnenbrillen, oder im blauen Frequenzbereich wie bei Gelbfilterbrillen um den Melatoninhaushalt des Körpers zu beeinflussen und die biegeelastisch sind. Unter biegeelastisch wird hier verstanden, dass das entsprechende Material bei manueller Handhabung biegsam aber nicht dehnbar ist, und im belastungsfreien Zustand elastisch in einen Ausgangszustand zurückkehrt. Des Weiteren sind Brillen bekannt, bei denen rechtes und linkes Sichtfeld des optischen Mittelteils zur Darstellung dreidimensional wahrzunehmender Bilder unterschiedliche Filtereigenschaften aufweisen und die somit auch als 3D-Brillen bezeichnet werden. Auch bei diesen Brillen finden Kunststoffe mit entsprechenden optischen Eigenschaften Einsatz, die in der Regel biegeelastisch sind.

Insbesondere wenn eine schützende Wirkung erzielt werden soll, muss der optische Mittelteil möglichst nah am Gesicht angeordnet werden, sodass der Abstand zwischen Brillenrand und Hautoberfläche möglichst gering gehalten wird. Auf diese Weise kann die Menge des seitlich eintretenden Lichts, das nicht den optischen Mittelteil quert aber dennoch das Auge des Trägers erreicht, verringert werden. Zusätzlich kann auf diese Weise eine mechanische Barriere zwischen dem Augenbereich und der Umwelt geschaffen werden, um damit einen zusätzlichen Schutz vor Staub, Sand, Spritzern usw. zu bieten. Dieser Maßnahme sind im praktischen Einsatz aber Grenzen gesetzt, etwa wenn der Träger gleichzeitig eine Brille zur Korrektur von Fehlsichtigkeiten tragen muss und zusätzlich eine Gelbfilterbrille oder 3D-Brille tragen soll. Zur Reduktion von seitlich eintretendem Licht sind zudem Ausführungen bekannt, bei denen ein Rahmenteil des optischen Mittelteils im Wesentlichen senkrecht von der optisch aktiven Brillenfläche absteht und in Gebrauchslage bis zur Gesichtsfläche des Trägers reicht. Diese Ausführungen sind aber klobig und im praktischen Einsatz unhandlich und zudem vergleichsweise teuer herzustellen

Aus der US 2005/275795 ist eine Brille mit geschlossenem Übergang vom Mittelteil zu den Bügeln bekannt.

Die DE 10 2004 027013 zeigt eine Brille mit einem bistabilen Scharnier.

Es ist daher das Ziel der Erfindung eine Brille zu verwirklichen, bei der in Gebrauchslage seitlich eintretendes Licht, das nicht den optischen Mittelteil quert aber dennoch das Auge des Trägers erreicht, weitestgehend unterbunden wird. Die Brille soll dabei praktisch in ihrer Handhabung und günstig herzustellen sein.

Diese Ziele werden durch die Merkmale von Anspruch 1 erreicht. Anspruch 1 bezieht sich auf eine Brille mit zwei Bügeln, die jeweils über eine Schwenkverbindung an einem in Gebrauchslage das Sichtfeld bedeckenden, optischen Mittelteil angelenkt sind und von einem Lagerungszustand, in dem die Bügel am optischen Mittelteil angelegt sind, in einen Gebrauchszustand, in dem die Bügel vom Mittelteil ausgeklappt sind, schwenkbar sind, wobei der optische Mittelteil aus einem biegeelastischen Material gefertigt ist. Erfindungsgemäß ist dabei vorgesehen, dass die beiden Bügel jeweils über zumindest eine gekrümmte Schwenkachse der Schwenkverbindung oder jeweils über zumindest zwei quer zueinander angeordnete, geradlinige Schwenkachsen der Schwenkverbindung am Mittelteil angelenkt sind, wobei der aus einem biegeelastischen Material hergestellte optische Mittelteil beim Ausschwenken der Bügel einen vom Schwenkwinkel der Bügel abhängigen und mit zunehmendem Schwenkwinkel zunehmend gewölbten Zustand einnimmt. Bei quer zueinander angeordneten, geradlinigen Schwenkachsen schließen die Schwenkachsen oder deren gedachte Verlängerungen einen Winkel α ungleich 0° oder 180° ein, sind also nicht parallel zueinander angeordnet. Diese Ausführung bewirkt, dass der aus einem biegeelastischen Material hergestellte optische Mittelteil beim Ausschwenken der Bügel einen vom Schwenkwinkel der Bügel abhängigen und mit zunehmendem Schwenkwinkel zunehmend gewölbten Zustand einnimmt. Die hierbei aufzuwendende Biegekraft ist umso stärker, je steifer das biegeelastische Material des optischen Mittelteils ist, je größer die Krümmung der Schwenkachse oder die Schrägstellung der zumindest zwei geradlinigen Schwenkachsen zueinander ist, und je größer der Schwenkwinkel ist. Durch geeignete Wahl der Schwenkachsen und der Biegeelastizität des optischen Mittelteils können bei aufgeklappten Bügeln unterschiedlich starke Wölbungen des Mittelteils verwirklicht werden, die etwa auch so stark sein kann, dass der optische Mittelteil mit seiner Umfangslinie in Gebrauchslage zumindest teilweise in Anlage zum Gesicht des Trägers gebracht werden kann. Seitlich eintretendes Licht, das nicht den optischen Mittelteil quert aber dennoch das Auge des Trägers erreicht, kann somit weitestgehend reduziert werden. Bei geeigneter Größe der erfindungsgemäßen Brille kann auch eine Brille zur Korrektur von Fehlsichtigkeiten unterhalb der erfindungsgemäßen Brille getragen werden. Wird die Brille abgenommen um die Bügel wieder an den optischen Mittelteil anzulegen, kehrt der optische Mittelteil wieder elastisch in einen Lagerungszustand zurück. Der optische Mittelteil ist dabei in der Regel rahmenlos ausgeführt, und die Bügel sind direkt am optischen Mittelteil angelenkt und nicht etwa an einem Rahmen wie in herkömmlicher Weise vorgesehen ist, damit die im Zuge des Ausschwenkens der Bügel ausgeübten Biegekräfte unmittelbar auf den optischen Mittelteil übertragen werden und dessen Wölbung herbeiführen. Der optische Mittelteil weist hierfür eine brillenähnliche Umfangslinie auf, die zwei Sichtbereiche und einen mittigen, im Vergleich zu den beiden Sichtbereichen schmäleren Nasenbereich definiert. Zudem bewirkt die erfindungsgemäße Ausführung der Schwenkachsen, dass die Bügel bei aufgeklappter Brille einen leichten Anpressdruck auf die Schläfe des Trägers ausüben, da der gewölbte optische Mittelteil eine in seinen ebenen Zustand rückstellende Kraft ausübt, die die Bügel in Richtung des optischen Mittelteils zieht.

Der optische Mittelteil kann im Lagerungszustand einen ebenen Zustand einnehmen, um eine besonders praktische Handhabung im Lagerungszustand und eine kostengünstigere Herstellung zu ermöglichen. Es kann jedoch auch vorgesehen sein, dass der optische Mittelteil im Lagerungszustand mit einer Vorkrümmung versehen ist, um sicherzustellen, dass sich der optische Mittelteil im Zuge des Ausschwenkens der Brillenbügel nach außen und nicht nach innen wölbt, und um die aufzuwendende Biegekraft zu verringern.

Gemäß einer Ausführungsform können Bügel und optischer Mittelteil aus demselben biegeelastischen Material gefertigt sein, sodass besonders einfache und kostengünstige Lösungen ermöglicht werden. Für diese Ausführungsformen wird vorzugsweise vorgeschlagen, dass es sich bei der Schwenkverbindung um zumindest eine Biegelinie oder Biegezone handelt. Eine Biegelinie oder Biegezone kann etwa durch eine Materialschwächung beispielsweise durch Perforierung in diesen Bereichen verwirklicht werden.

Die Schwenkverbindung muss einen Schwenkwinkel des Bügels von 0° bis zumindest 90° erlauben. Um Materialschädigungen durch die dabei an der Schwenkverbindung wirkenden Kräfte bei oftmaligem Verschwenken der Bügel zu verringern wird vorzugsweise vorgeschlagen, dass es sich bei der Schwenkverbindung um zumindest zwei parallele Biegelinien handelt, um den Biegewinkel je Biegelinie zu verkleinern. Bei einem Schwenkwinkel von 90° wird der Biegewinkel je Biegelinie somit auf 45° verkleinert, wodurch die Beanspruchung des Materials verringert werden kann. Bei einer Verwirklichung mehrerer paralleler Biegelinien geht der Bereich der betreffenden Schwenkverbindung schließlich in eine Biegezone über, wie sie oben erwähnt wurde.

Eine weitere Ausführungsform sieht vor, dass es sich bei der Schwenkverbindung um ein Filmscharnier handelt. Hierbei wird ein Materialfilm an seinem ersten Ende an einem Bügel befestigt, etwa verklebt, und an seinem zweiten Ende am optischen Mittelteil. Vorzugsweise wird das Filmscharnier dabei an den Außenseiten von Bügel und optischem Mittelteil befestigt, um auf diese Weise Designakzente setzen zu können, die durch die optischen Eigenschaften des Mittelteils nicht beeinträchtigt werden. Vorzugsweise weist das Filmscharnier dabei zwei parallele Biegelinien auf, zwischen denen das Filmscharnier einen Wulst ausbildet. Auf diese Weise werden Scherbelastungen auf das Filmscharnier verringert. Zudem kann ein größerer Abstand überwunden werden, ohne dass die Übertragung von Biegekräften vom Bügel auf den optischen Mittelteil beeinträchtigt wird, da der Wulst eine stabilisierende Funktion ausübt.

Des Weiteren wird vorzugsweise vorgeschlagen, dass der Mittelteil zumindest einen Knick aufweist, der symmetrisch und rechtwinkelig zu einer in eine Querrichtung des optischen Mittelteils verlaufenden Symmetrieachse angeordnet ist. Die Symmetrieachse verläuft dabei im Nasenbereich und teilt die Brille in zwei symmetrische Hälften. Durch den Knick kann sichergestellt werden, dass sich der optische Mittelteil beim Öffnen der Bügel nach außen und nicht nach innen wölbt. Zudem versteift ein solcher Knick den optischen Mittelteil insbesondere im schmäleren Nasenbereich. Alternativ kann vorgesehen sein, dass der Mittelteil zumindest eine Längsaussteifung aufweist, die symmetrisch und rechtwinkelig zu einer in eine Querrichtung des optischen Mittelteils verlaufenden Symmetrieachse angeordnet ist. Des Weiteren kann auch vorgesehen sein, dass die Bügel jeweils zumindest eine in Längsrichtung des Bügels verlaufende Längsaussteifung aufweisen.

Vorzugsweise weisen auch die Bügel jeweils zumindest einen in Längsrichtung des Bügels verlaufenden Versteifungsknick auf, um die Bügel jeweils zu versteifen.

Da die Bügel zumeist länger sind als die Erstreckung des optischen Mittelteils zwischen den Bügeln wird ferner vorgeschlagen, dass die Bügel jeweils eine Ausnehmung zur Aufnahme des jeweils anderen Bügels im Lagerungszustand aufweisen. Die Brillenbügel können somit im Lagerungszustand bei ebener Konfiguration in Anlage mit dem optischen Mittelteil gebracht werden.

Des Weiteren hat es sich als vorteilhaft erwiesen, wenn der optische Mittelteil über den Bügel geringfügig hinausragt, oder der Bügel über den optischen Mittelteil geringfügig hinausragt. Zudem kann vorgesehen sein, dass der Bügel und/oder der optische Mittelteil im Bereich der Schwenkverbindung eine elastische Dichtung aufweisen.

Zudem wird vorgeschlagen, dass die Schwenkverbindung als Biegezone ausgeführt ist, die den optischen Mittelteil mit dem jeweiligen Bügel verbindet, wobei der Bügel zumindest einen Abschnitt aus einem Material mit geringerer Biegeelastizität aufweist als die Biegezone. Diese Variation der Biegeelastizität kann etwa durch Verwendung unterschiedlicher Kunststoffmaterialien für den optischen Mittelteil, die Biegezone und den Bügel erzielt werden, oder durch unterschiedliche Materialstärken.

Die Erfindung wird in weiterer Folge anhand von Ausführungsbeispielen mithilfe der beiliegenden Figuren näher erläutert. Es zeigen hierbei die
Fig. 1 eine perspektivische Ansicht einer Ausführungsform der erfindungsgemäßen Brille in Gebrauchslage,
Fig. 2 eine Seitensicht einer Ausführungsform der erfindungsgemäßen Brille in Gebrauchslage,
Fig. 3a eine Ansicht einer Ausführungsform der erfindungsgemäßen Brille bei ausgeschwenkten Bügeln von oben gesehen,
Fig. 3b eine Ansicht einer Ausführungsform der erfindungsgemäßen Brille bei ausgeschwenkten Bügeln von vorne gesehen,
Fig. 3c eine Ansicht einer Ausführungsform der erfindungsgemäßen Brille bei ausgeschwenkten Bügeln von der Seite gesehen,
Fig. 4 eine perspektivische Ansicht einer Ausführungsform der erfindungsgemäßen Brille bei eingeschwenkten Bügeln im Lagerungszustand,
Fig. 5 eine Ausführungsform der erfindungsgemäßen Brille mit jeweils zwei quer zueinander angeordneten, geradlinigen Schwenkachsen,
Fig. 6 eine Darstellung zur Erläuterung der Abhängigkeit der Wölbung von der Schrägstellung der Schwenkachsen zueinander (Fig. 6a und 6b) sowie vom Schwenkwinkel der Bügel (Fig. 6c),
Fig. 7 eine Ausführungsform der erfindungsgemäßen Brille mit jeweils drei quer zueinander angeordneten, geradlinigen Schwenkachsen,
Fig. 8 eine Ausführungsform der erfindungsgemäßen Brille mit jeweils einer gekrümmten Schwenkachse,
Fig. 9 drei unterschiedliche Ausführungsformen eines Brillenbügels für eine erfindungsgemäße Brille,
Fig. 10 eine einteilige Ausführungsform der erfindungsgemäßen Brille,
Fig. 11 eine dreiteilige Ausführungsform der erfindungsgemäßen Brille,
Fig. 12 eine Detailansicht einer Schwenkverbindung eines Bügels zum optischen Mittelteil mit zwei parallelen Biegelinien,
Fig. 13 eine Detailansicht einer Schwenkverbindung eines Bügels zum optischen Mittelteil mit einer Biegezone,
Fig. 14 eine Darstellung einer Ausführungsform der Schwenkverbindung über ein Scharnier,
Fig. 15 eine Darstellung einer weiteren Ausführungsform der Schwenkverbindung über ein Scharnier im unverbundenen Zustand (Fig. 15a), im eingesteckten Zustand (Fig. 15b) und in einem dem Lagerungszustand der Brille entsprechenden Zustand (Fig. 15c),
Fig. 16 eine Darstellung einer weiteren Ausführungsform der Schwenkverbindung über ein Filmscharnier in einem dem Lagerungszustand entsprechenden Zustand (Fig. 16a) und einem geöffneten Zustand (Fig. 16b),
Fig. 17a die Ausführungsform gemäß Fig. 16a in perspektivischer Darstellung,
Fig. 17b die Ausführungsform gemäß Fig. 16b in perspektivischer Darstellung,
Fig. 18 eine Darstellung einer weiteren Ausführungsform der erfindungsgemäßen Brille mit einem Knick im Mittelteil,
Fig. 19 eine Darstellung einer weiteren Ausführungsform der erfindungsgemäßen Brille mit einem in Längsrichtung des Bügels verlaufenden Knick,
Fig. 20 eine Darstellung einer weiteren Ausführungsform der erfindungsgemäßen Brille mit einem zwischen dem Bügel und dem Mittelteil vorgesehenen Schlitz zur Aufnahme des jeweils anderen Bügels,
Fig. 21a eine perspektivische Darstellung einer weiteren Ausführungsform der erfindungsgemäßen Brille mit Bügeln, die jeweils eine Ausnehmung zur Aufnahme des jeweils anderen Bügels aufweisen, wobei der in der Fig. 21a rechte Bügel teilweise eingeklappt ist,
Fig. 21b die Ausführungsform der Fig. 21a, wobei der in der Fig. 21a rechte Bügel zur Gänze eingeklappt ist,
Fig. 22a eine erste Ausführungsform der Ausnehmung für eine erfindungsgemäße Brille gemäß der Fig. 21,
Fig. 22b eine zweite Ausführungsform der Ausnehmung für eine erfindungsgemäße Brille gemäß der Fig. 21,
Fig. 22c eine dritte Ausführungsform der Ausnehmung für eine erfindungsgemäße Brille gemäß der Fig. 21,
Fig. 23a eine weitere Ausführungsform einer erfindungsgemäßen Brille mit teilweise geöffnetem Spalt zwischen Bügel und optischem Mittelteil,
Fig. 23b eine weitere Ausführungsform einer erfindungsgemäßen Brille, bei der der optische Mittelteil über den Bügel geringfügig hinausragt,
Fig. 23c eine weitere Ausführungsform einer erfindungsgemäßen Brille, bei der der Bügel über den optischen Mittelteil geringfügig hinausragt,
Fig. 24a eine weitere Ausführungsform einer erfindungsgemäßen Brille mit teilweise geöffnetem Spalt zwischen Bügel und optischem Mittelteil,
Fig. 24b eine weitere Ausführungsform einer erfindungsgemäßen Brille, bei der Bügel und optischer Mittelteil im Bereich der Schwenkverbindung elastische Dichtungen aufweisen,
Fig. 24c eine weitere Ausführungsform einer erfindungsgemäßen Brille, bei der der Bügel im Bereich der Schwenkverbindung eine elastische Dichtung aufweist,
Fig. 24d eine weitere Ausführungsform einer erfindungsgemäßen Brille, bei der der optische Mittelteil im Bereich der Schwenkverbindung eine elastische Dichtung aufweist,
Fig. 25 eine weitere Ausführungsform einer erfindungsgemäßen Brille, bei der das dem Ohr näherliegende Ende durch ein starres Element ausgeformt wird, das in den biegsamen Bereich des Bügels hineinragt,
Fig. 26a, b Darstellungen zum Einfalten des Bügels bei einer erfindungsgemäßen Brille,
Fig. 27a, b Darstellungen einer weiteren Ausführungsform einer erfindungsgemäßen Brille mit zweigeteiltem Bügel,
Fig. 28a, b Darstellungen einer weiteren Ausführungsform einer erfindungsgemäßen Brille, bei der die Bügel im Vorderteil durch ein biegeelastisches Material und im Hinterteil durch einen bogenförmig geformten Metallbügel ausgeformt sind,
Fig. 29a, b Darstellungen einer weiteren Ausführungsform einer erfindungsgemäßen Brille mit elastischem Halteband,
Fig. 30a, b Darstellungen einer weiteren Ausführungsform einer erfindungsgemäßen Brille mit Längsaussteifungen,
Fig. 31a, b Darstellungen einer weiteren Ausführungsform einer erfindungsgemäßen Brille mit verdickten Bereichen am Mittelteil oder Bügel, und die
Fig. 32 eine Darstellung einer weiteren Ausführungsform einer erfindungsgemäßen Brille mit starren zweigeteilten Brillenbügeln, die an den ohrseitigen Enden durch ein Gelenk verbunden sind.

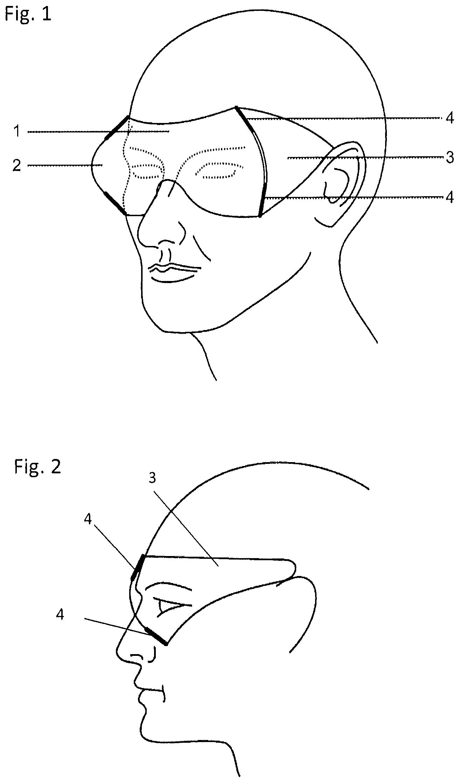

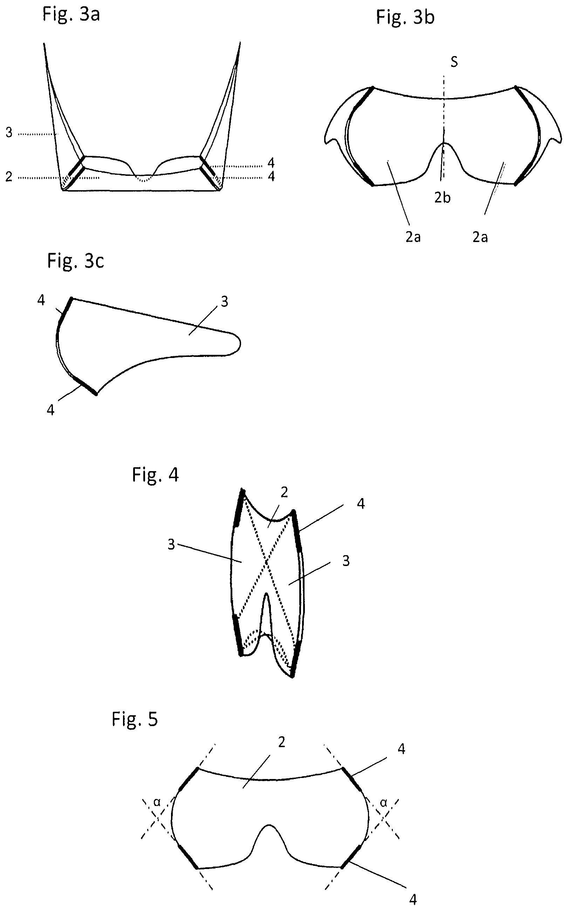

Zunächst wird auf die Fig. 1 und 2 Bezug genommen, die eine Ausführungsform der erfindungsgemäßen Brille 1 in Gebrauchslage in unterschiedlichen Ansichten zeigen. Die Brille 1 weist einen optischen Mittelteil 2 und zwei Bügel 3 auf, die jeweils am optischen Mittelteil 2 über Schwenkverbindungen 4 angelenkt sind. In den beigeschlossenen Figuren sind dabei die Schwenkverbindungen 4 jeweils in dicken Linien dargestellt. In Gebrauchslage gemäß der Fig. 1 und 2 befindet sich der optische Mittelteil 2 in einem gewölbten Zustand, der das Sichtfeld des Trägers überspannt, wobei die Umfangslinie des optischen Mittelteils 2 zumindest teilweise bis zur Anlage an das Gesicht des Trägers gebracht werden kann, um auf diese Weise seitlich eintretendes Licht, das den optischen Mittelteil 2 nicht quert aber dennoch das Auge des Trägers erreicht, weitestgehend vermieden werden kann. Die Fig. 3 zeigt hierzu eine Ansicht einer Ausführungsform der erfindungsgemäßen Brille bei ausgeschwenkten Bügeln 3 von oben gesehen (Fig. 3a), von vorne gesehen (Fig. 3b), sowie von der Seite gesehen (Fig. 3c). Insbesondere ist dabei ersichtlich, dass der optische Mittelteil 2 im Gebrauchszustand eine annähernd zylindrische Wölbung aufweist, deren Mantellinien senkrecht zur Symmetrieachse S verlaufen.

Der optische Mittelteil 2 ist dabei in der Regel rahmenlos ausgeführt, und die Bügel 3 sind direkt am optischen Mittelteil 2 angelenkt und nicht etwa an einem Rahmen wie in herkömmlicher Weise vorgesehen ist, damit die im Zuge des Ausschwenkens der Bügel 3 ausgeübten Biegekräfte unmittelbar auf den optischen Mittelteil 2 übertragen werden und dessen Wölbung herbeiführen. Der optische Mittelteil 2 weist hierfür eine brillenähnliche Umfangslinie auf, die zwei Sichtbereiche 2a und einen mittigen, im Vergleich zu den beiden Sichtbereichen 2a schmäleren Nasenbereich 2b definiert (Fig. 3b). Der optische Mittelteil 2 sowie die Bügel 3 sind aus einem biegeelastischen Material gefertigt, vorzugsweise ein Kunststoff mit den jeweils geforderten optischen Eigenschaften.

Im Lagerungszustand können die Bügel 3 an den optischen Mittelteil 2 angelegt werden, wie in der Fig. 4 ersichtlich ist. In der gezeigten Ausführungsform nimmt dabei der optische Mittelteil 2 im Lagerungszustand einen ebenen Zustand ein, wodurch die praktische Handhabung durch die flache Konstruktion und damit kompakte Lagerung sowie die Herstellung sehr erleichtert werden.

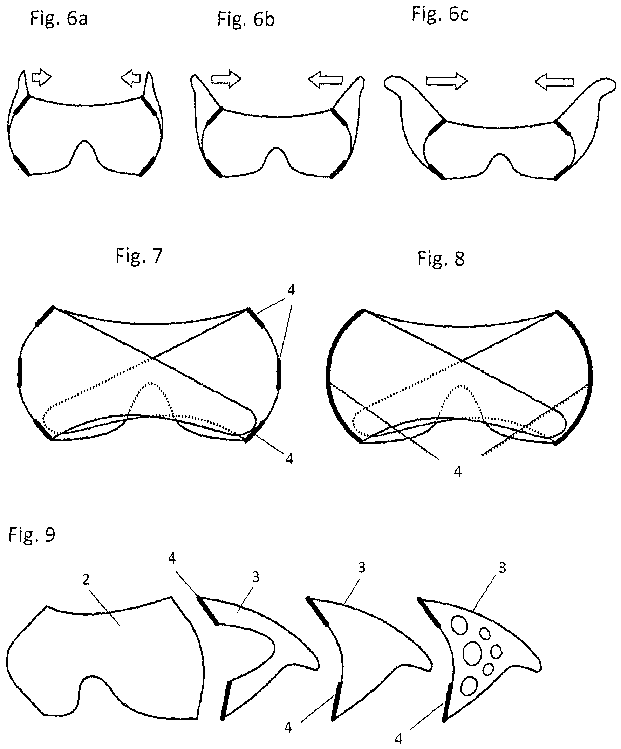

Anhand der Fig. 5 bis 8 werden unterschiedliche geometrische Verwirklichungen der Schwenkverbindungen 4 erläutert, um die erfindungsgemäß gewünschte Wölbung des optischen Mittelteils 2 im Zuge des Ausschwenkens der Bügel 3 zu erzielen. Bei quer zueinander angeordneten, geradlinigen Schwenkachsen der Schwenkverbindungen 4 schließen die Schwenkachsen oder deren gedachte Verlängerungen einen Winkel α ungleich 0° oder 180° ein, sind also nicht parallel zueinander angeordnet (Fig. 5). Diese Ausführung bewirkt, dass der aus einem biegeelastischen Material hergestellte optische Mittelteil 2 beim Ausschwenken der Bügel 3 einen vom Schwenkwinkel der Bügel 3 abhängigen und mit zunehmendem Schwenkwinkel zunehmend gewölbten Zustand einnimmt. Die hierbei erzielte Wölbung ist umso stärker, je größer die Schrägstellung der zumindest zwei geradlinigen Schwenkachsen zueinander ist, wie einem Vergleich der Fig. 6a und 6b entnommen werden kann, und je größer der Schwenkwinkel der Bügel 3 ist, wie durch die Fig. 6c angedeutet wird. Durch geeignete Wahl der Schwenkachsen und der Biegeelastizität des optischen Mittelteils 2 können bei aufgeklappten Bügeln 3 unterschiedlich starke Wölbungen des Mittelteils 2 verwirklicht werden.

Dabei können auch Ausführungsformen der erfindungsgemäßen Brille 1 mit jeweils drei quer zueinander angeordneten, geradlinigen Schwenkachsen der Schwenkverbindung 4 verwirklicht werden, wie in der Fig. 7 dargestellt ist. Bei tatsächlicher oder gedachter Wahl einer noch höheren Anzahl an Schwenkverbindungen 4 kann schließlich eine Konfiguration wie in der Fig. 8 erreicht werden, bei der die beiden Bügel 3 jeweils über eine gekrümmte Schwenkachse, die etwa auch durchgehend ausgeführt sein kann, der Schwenkverbindung 4 am Mittelteil 2 angelenkt sind.

Die Fig. 9 zeigt beispielhaft drei unterschiedliche Ausführungsformen eines Bügels 3 für eine erfindungsgemäße Brille 1, wobei auch ersichtlich ist, wie etwa die beiden Schwenkachsen einer Schwenkverbindung 4 eines Bügels 3 zum Mittelteil 2 beispielsweise der Fig. 3 einem Bügel 3 zugeordnet werden können. Der Bügel 3 kann dabei einteilig mit dem optischen Mittelteil 2 ausgeführt sein, oder auch als separater und somit auch austauschbarer Teil. Im letzteren Fall wäre es etwa möglich Mittelteile 2 für unterschiedliche Gesichtsformen oder auch Bügel 3 für unterschiedliche Kopfformen austauschbar zu befestigen.

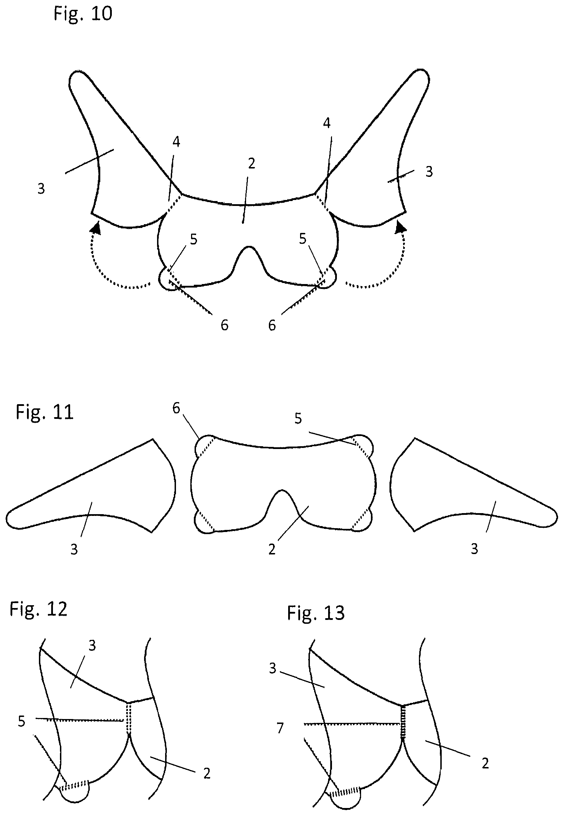

Die Fig. 10 zeigt etwa eine einteilige Ausführung einer erfindungsgemäßen Brille 1, bei der die beiden Bügel 3 über Biegelinien 5 jeweils am oberen Bereich des optischen Mittelteils 2 angelenkt sind. Diese Biegelinie 5 können etwa durch eine Materialschwächung beispielsweise durch Perforierung in diesem Bereich verwirklicht werden. In den unteren Bereichen des Mittelteils 2 sind Klebelaschen 6 angeformt, die an den Bügeln 3 befestigt, etwa angeklebt werden können, wie durch die Pfeile der Fig. 10 angedeutet wird. Auch die Klebelaschen 6 verfügen über Biegelinien 5. Nach Befestigung der Klebelaschen 6 am jeweiligen Bügel 3 kann nur mehr im Lagerungszustand bei Anliegen der Bügel 3 am optischen Mittelteil 2 ein spannungsfreier Zustand eingenommen werden. Sobald die Bügel 3 vom Mittelteil 2 weg bewegt, also ausgeschwenkt werden, wird der Mittelteil 2 in einen Spannungszustand versetzt, der eine zunehmende Wölbung des Mittelteils 2 verursacht. Freilich könnten auch am jeweiligen Bügel 3 die Klebelaschen 6 vorgesehen sein, die in diesem Fall am unteren Bereich des Mittelteils 2 angeklebt werden können.

Die Fig. 11 zeigt im Gegensatz zur Fig. 10 eine dreiteilige Ausführungsform, bei der der optische Mittelteil 2 sowie die beiden Bügel 3 jeweils als separate Teile ausgeführt sind. Die Klebelaschen 6 sind dabei in den oberen und unteren Bereichen des Mittelteils 2 angeformt und können an den Bügeln 3 befestigt, etwa angeklebt werden. Die Klebelaschen 6 verfügen wiederum über Biegelinien 5.

Wie bereits ausgeführt wurde, müssen die Schwenkverbindungen 4 der Bügel 3 Schwenkwinkel von 0° bis zumindest 90° erlauben. Um Materialschädigungen durch die dabei an der Schwenkverbindung 4 wirkenden Kräfte bei oftmaligem Verschwenken der Bügel 3 zu verringern kann vorgesehen sein, dass es sich bei der Schwenkverbindung 4 um zumindest zwei parallele Biegelinien 5 handelt, wie in der Fig. 12 gezeigt wird. Diese Maßnahme verkleinert den Biegewinkel je Biegelinie 5. Bei einem Schwenkwinkel von 90° wird der Biegewinkel je Biegelinie 5 somit auf 45° verkleinert, wodurch die Beanspruchung des Materials verringert werden kann. Bei Verwirklichung mehrerer paralleler Biegelinien 5 geht der Bereich der betreffenden Schwenkverbindung 4 schließlich in eine Biegezone 7 über, wie in der Fig. 13 angedeutet wird.

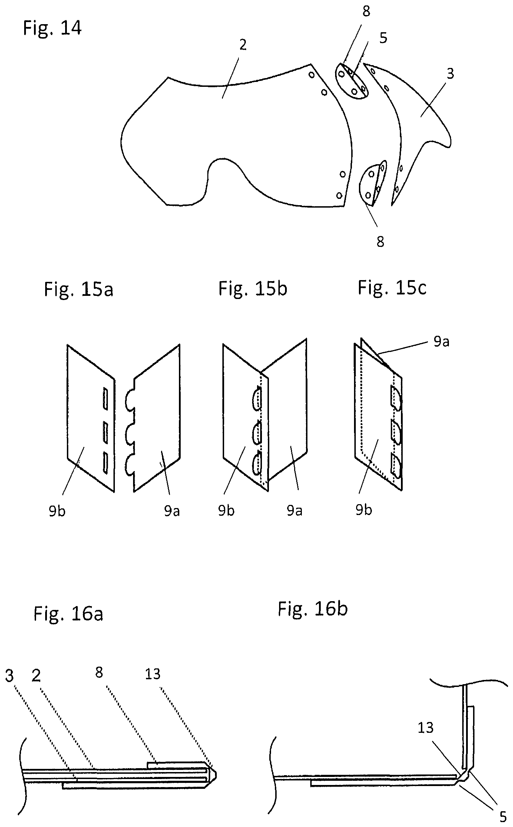

In der Fig. 14 ist eine erste Ausführungsform eines Filmscharniers 8 gezeigt. Hierbei wird ein Materialfilm an seinem ersten Ende an einem Bügel 3 befestigt, etwa gesteckt, genietet oder verklebt, und an seinem zweiten Ende am optischen Mittelteil 2. Die Filmscharniere 8 der Fig. 14 weisen dabei jeweils eine Biegelinie 5 auf. Die Fig. 15 zeigt im Unterschied dazu ein Scharnier 9, bei dem ein beispielsweise am Bügel 3 befestigtes, erstes Scharnierteil 9a Laschen aufweist und ein beispielsweise am Mittelteil 2 befestigtes, zweites Scharnierteil 9b Scharnierschlitze aufweist (Fig. 15a), in die die Laschen des ersten Scharnierteils 9a gesteckt werden können (Fig. 15b). Die Laschen sind dabei so dimensioniert, dass sie einen Widerstand überwinden müssen, wenn sie in die ihnen jeweils zugeordneten Scharnierschlitze gesteckt werden, damit sich die so gebildete Schwenkverbindung 4 nicht von selber wieder lösen kann. Die Scharnierschlitze sind aber dennoch ausreichend breit, sodass die beiden Scharnierteile 9a, 9b im Lagerungszustand sehr flach aneinander liegen können (Fig. 15c).

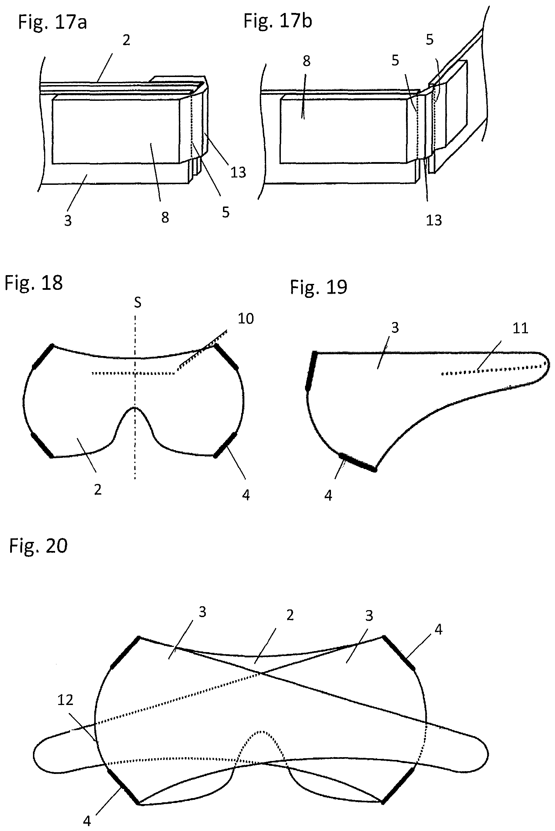

In den Fig. 16 und 17 ist eine weitere Ausführungsform eines Filmscharniers 8 gezeigt, das zwei parallele Biegelinien 5 aufweist, zwischen denen das Filmscharnier 8 einen Wulst 13 ausbildet. Auf diese Weise werden Scherbelastungen auf das Filmscharnier 8 verringert. Zudem kann ein größerer Abstand überwunden werden, ohne dass die Übertragung von Biegekräften vom Bügel 3 auf den optischen Mittelteil 2 beeinträchtigt wird, da der Wulst 13 eine stabilisierende Funktion ausübt. Vorzugsweise wird das Filmscharnier 8 dabei an den Außenseiten von Bügel 3 und optischem Mittelteil 2 befestigt, um auf diese Weise Designakzente setzen zu können, die durch die optischen Eigenschaften des Mittelteils 2 nicht beeinträchtigt werden.

Gemäß einer weiteren Ausführungsform kann vorgesehen sein, dass der Mittelteil 2 einen Knick 10 aufweist, wie in der Fig. 18 durch die punktierte Linie gezeigt wird. Bei geeigneter Ausführung dieses Knicks 10 kann sichergestellt werden, dass sich der optische Mittelteil 2 beim Öffnen der Bügel 3 nach außen und nicht nach innen wölbt. Zudem versteift ein solcher Knick 10 den optischen Mittelteil 2 insbesondere im schmäleren Nasenbereich 2b.

In der Fig. 19 wird gezeigt, dass auch die Bügel 3 jeweils einen in Längsrichtung des Bügels 3 verlaufenden Versteifungsknick 11 aufweisen können, um die Bügel 3 jeweils zu versteifen. Diese Maßnahme erweist sich insbesondere bei Verwendung eines biegeelastischen Materials für die Bügel 3 als sehr vorteilhaft.

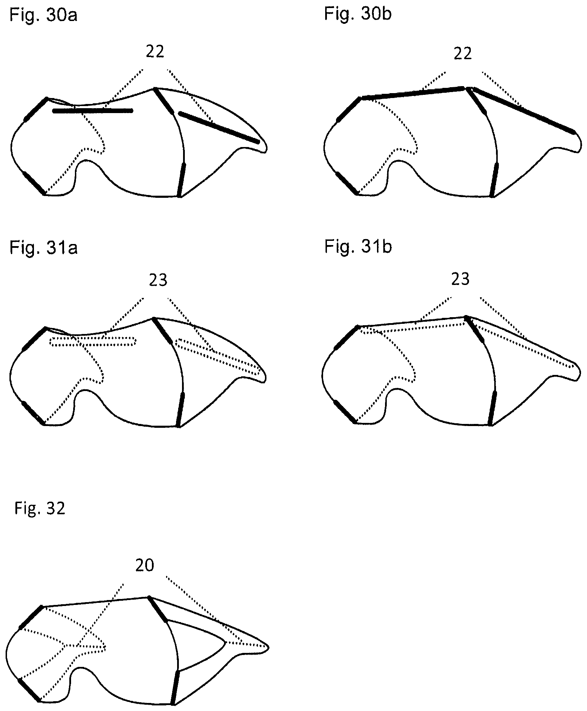

In einer weiteren Ausführungsform werden anstelle eines Knicks 10 oder Versteifungsknicks 11 zur Versteifung des optischen Mittelteiles 2 oder der Bügel 3 Längsaussteifungen 22 an Mittelteil 2 oder Bügel 3 angeordnet oder in diesen eingebettet, wie in den Fig. 30 a,b ersichtlich ist. Diese Längsausteifungen 22 können beispielsweise als starre Längselemente, beispielsweise Metallstäbe oder dergleichen, ausgeführt sein. In einer weiteren Ausführungsform werden anstelle eines Knicks 10 oder Versteifungsknicks 11 zur Versteifung des optischen Mittelteiles 2 oder der Bügel 3 verdickte Bereiche 23 in diesen Elementen hergestellt, wie in den Fig. 31 a,b ersichtlich ist.

In der Fig. 20 ist ersichtlich, dass zwischen dem Bügel 3 und dem Mittelteil 2 ein Schlitz 12 zur Aufnahme des jeweils anderen Bügels 3 im Lagerungszustand vorgesehen sein kann, da die Bügel 3 zumeist länger sind als die Erstreckung des optischen Mittelteils 2 zwischen den Bügeln 3 und die Bügel 3 auf diese Weise im Lagerungszustand bei ebener Konfiguration in Anlage mit dem optischen Mittelteil 2 gebracht werden können. Da die Bügel 3 praktischerweise länger als der optische Mittelteil 2 sind, um im Ohrenbereich ausreichend Halt zu geben, müssen sie beim Zusammenlegen der Brille aber mitunter stark gekrümmt werden, um durch den Schlitz 12 gesteckt werden zu können. Wenn das Material der Bügel 3 dicker ausgeformt ist, kann dieser Vorgang das Material im Biegebereich stark belasten.

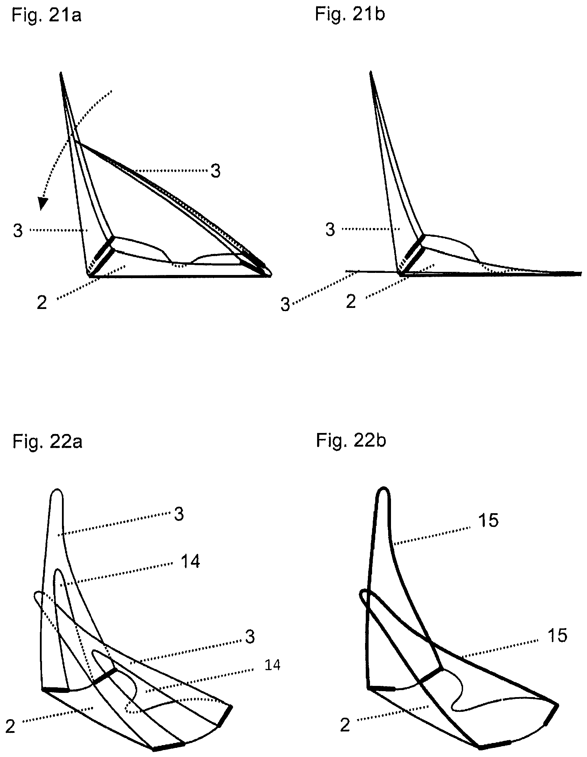

Die Fig. 21a, b und 22a-c zeigen daher Ausführungsformen, bei denen die beiden Bügel 3 jeweils eine Ausnehmung 14 zur Aufnahme des jeweils anderen Bügels 3 im Lagerungszustand aufweisen, damit beim Zusammenlegen der Brille (siehe Fig. 21) derjenige Bügel 3, der als erstes eingefaltet wird, durch die Ausnehmung 14 des gegenüberliegenden Bügels 3 auf den optischen Mittelteil 2 geklappt werden kann, ohne den Bügel 3 dabei verbiegen zu müssen.

Fig. 22b zeigt dabei eine Ausführungsform, bei der die Bügel 3 durch Metallbügel 15, beispielsweise ein geeigneter Draht, ausgebildet sind, sodass naturgemäß jeder Bügel 3 durch den offenen Bereich des gegenüberliegenden Bügels 3 geklappt werden kann.

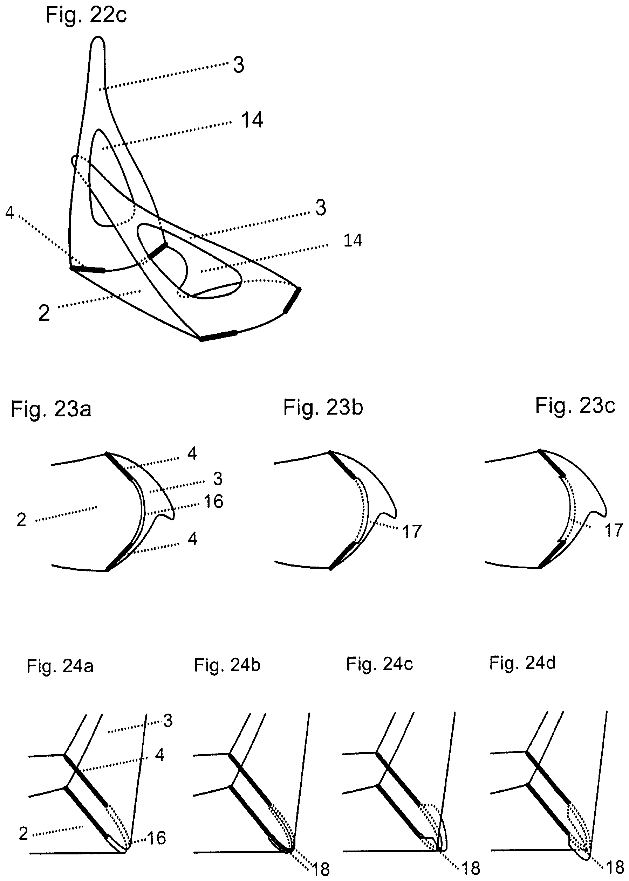

Die Fig.22c zeigt eine Ausführungsform, bei der die Ausnehmung 14 im Bügel 3 nicht bis zur Schwenkverbindung 4 reicht, sodass im Bereich der Schwenkverbindung 4 einerseits noch ein Schutz gegen Licht, Wind, Späne (bei Schutzbrille), etc. verbleibt, andererseits aber die Bügel 3 in Längsrichtung trotzdem steif ausgestaltet sein können, da sie auch durch diese nun kleinere Ausnehmung 14 durchtauchen können, ohne in Längsrichtung geknickt, gefaltet, oder eingeschoben werden zu müssen.

Um das Eindringen von Fremdkörpern oder Licht durch einen zwischen dem Bügel 3 und dem optischen Mittelteil 2 gebildeten Spalt 16 zu verhindern, werden im folgenden mehrere Ausführungsformen beispielhaft angegeben.

Fig. 23a zeigt hierzu eine Ausführungsform, bei der der Spalt 16 zwischen Bügel 3 und optischem Mittelteil 2 noch ungeschützt ist.

Fig. 23b zeigt hingegen eine Ausführungsform, bei der der optische Mittelteil 2 über den Bügel 3 im Bereich zwischen den Schwenkverbindungen 4 hinausragt, und durch diese Überlappung 17 das frontale Eindringen von Fremdkörpern und Licht verhindert wird.

Fig. 23c zeigt eine Ausführungsform, bei der der Bügel 3 über den optischen Mittelteil 2 im Bereich zwischen den Schwenkverbindungen 4 hinausragt und durch diese Überlappung 17 das seitliche Eindringen von Fremdkörpern und Licht wiederum verhindert wird.

Eine weitere Möglichkeit das Eindringen von Fremdkörpern oder Licht durch einen zwischen dem Bügel 3 und dem optischen Mittelteil 2 gebildeten Spalt 16 zu verhindern wird in den Fig. 24a-d gezeigt.

Fig. 24a zeigt eine Ausführungsform, bei der der Spalt 16 zwischen Bügel 3 und optischem Mittelteil 2 noch ungeschützt ist.

Fig. 24b zeigt hingegen eine Ausführungsform, bei der optischer Mittelteil 2 und Bügel 3 im Bereich zwischen den Schwenkverbindungen 4 elastische Dichtungen 18 aufweisen, welche das Eindringen von Fremdkörpern und Licht verhindern.

Fig. 24c zeigt eine Ausführungsform, bei der der Bügel 3 im Bereich zwischen den Schwenkverbindungen 4 eine elastische Dichtung 18 aufweist, welche das Eindringen von Fremdkörpern und Licht verhindert.

Fig. 24d zeigt eine Ausführungsform, bei der der optische Mittelteil 2 im Bereich zwischen den Schwenkverbindungen 4 eine elastische Dichtung 18 aufweist, welche das Eindringen von Fremdkörpern und Licht verhindert.

Selbstverständlich können die oben genannten Dichtungsmöglichkeiten auch in Mischformen angewandt werden, bzw. auch weitere Abdichtmöglichkeiten angewendet werden, die hier nicht weiter explizit beschrieben werden.

Die Stabilität oder Steifigkeit der erfindungsgemäßen Brille während der Benutzung ist durch die Krümmung von optischem Mittelteil 2 und Bügel 3 gegeben. Wenn jedoch im Ohrenbereich das Material des Bügels 3 so schmal wird, dass keine zufriedenstellende Krümmung mehr gegeben ist, kann sich dieser Bereich vom Kopf wegbiegen und damit den Halt der Brille gefährden.

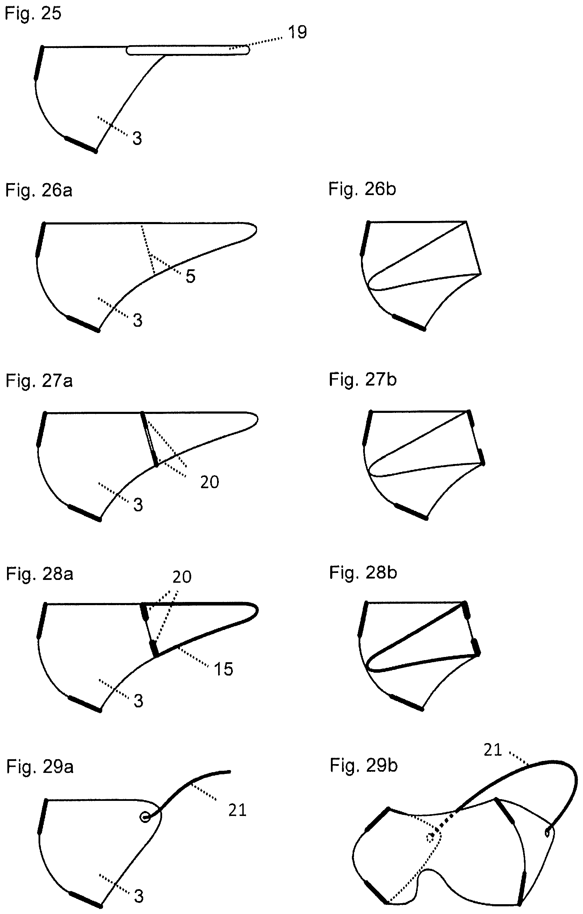

Fig. 25 zeigt daher eine Ausführungsform des Bügels 3, bei der das dem Ohr näherliegende Ende durch ein starres Element 19 ausgeformt wird, das in den biegsamen Bereich des Bügels 3 hineinragt und mit diesem nach dem Auffalten der Brille einen stabilen Halt am Kopf gewährleistet.

Um das beim Zusammenfalten der Brille notwendige Einschieben der Bügel 3 in den gegenüberliegenden Schlitz 12 oder in die gegenüberliegende Ausnehmung 14 zu vermeiden, werden im folgenden drei weitere Ausführungsformen angegeben.

Fig. 26a, b zeigen hierzu das einfache Einfalten eines Bügels 3 entlang einer Biegelinie 5. Dies ist möglich, wenn das Bügelmaterial dünn ist. Wird die Brille aufgeklappt und der eingefaltete Teil des Bügels 3 ebenfalls aufgeklappt, nimmt dieser eine zylindrische Krümmung an und kann sich nicht mehr vom Kopf wegbiegen.

Fig. 27a, b zeigen zweigeteilte Bügel 3. Die beiden Bügelteile eines Bügels 3 sind hier durch ein Gelenk 20 miteinander verbunden, ähnlich wie die Verbindung zwischen optischem Mittelteil 2 und Bügel 3, nur liegen hier die Schwenkachsen des Gelenks 20 in einer Linie.

Fig. 28a, b zeigen eine Ausführungsform, bei der die Bügel 3 in ihrem dem optischen Mittelteil 2 nahen Bereich durch ein biegeelastisches Material ausgeformt sind, und in ihrem dem optischen Mittelteil 2 fernen Bereich durch einen bogenförmig geformten Metallbügel 15.

Fig. 29 a,b, zeigen eine Ausführungsform, bei der die Bügel 3 in ihrem dem optischen Mittelteil 2 nahen Bereich nur so lange ausgeführt sind, um das seitliche Eindringen von Fremdkörpern oder Licht zu verhindern. Damit trotz solcher kurzer Bügelteile ein ausreichender Halt der Brille am Kopf ermöglicht wird, ist ein elastisches Band 21 vorgesehen, das den linken und rechten Bügel 3 miteinander verbindet, und beim Tragen der Brille über den Hinterkopf gezogen wird. Damit wird sichergestellt, dass die Brille auch bei heftigen Bewegungen, bei Wind usw. sicher den Augenbereich zu schützen vermag.

Die Fig. 30a, b zeigt Darstellungen einer weiteren Ausführungsform einer erfindungsgemäßen Brille, wobei der Mittelteil 2 zumindest eine Längsaussteifung 22 aufweist, die symmetrisch und rechtwinkelig zu einer in eine Querrichtung des optischen Mittelteils 2 verlaufenden Symmetrieachse angeordnet ist. Des Weiteren kann auch vorgesehen sein, dass die Bügel 3 jeweils zumindest eine in Längsrichtung des Bügels 3 verlaufende Längsaussteifung 22 aufweisen.

Die Fig. 31a, b zeigt Darstellungen einer weiteren Ausführungsform einer erfindungsgemäßen Brille mit verdickten Bereichen 23 am Mittelteil 2 oder Bügel 3.

Die Fig. 32 zeigt eine Darstellung einer weiteren Ausführungsform einer erfindungsgemäßen Brille mit starren, entlang ihrer Längsrichtung zweigeteilten Bügeln 3, die an den ohrseitigen Enden durch ein Gelenk 20 verbunden sind. Im Gegensatz zu einteiligen Bügeln 3 aus biegeelastischem Material bauen die starren Bügeln 3 der Fig. 32 keine Spannung auf. Die rückstellende Spannung der Brille wird hierbei ausschließlich durch den optischen Mittelteil 2 generiert.

Auf diese Weise kann eine Brille 1 verwirklicht werden, bei der in Gebrauchslage seitlich eintretendes Licht, das nicht den optischen Mittelteil 2 quert aber dennoch das Auge des Trägers erreicht, weitestgehend unterbunden wird. Die Brille 1 ist dabei praktisch in ihrer Handhabung, da sie im Lagerungszustand flach oder mit geringer Vorkrümmung ausgeführt werden kann und daher leicht zu verstauen ist. Die erfindungsgemäße Brille ist zudem günstig herzustellen.

### Bezugszeichenliste:

- 1: Brille
- 2: optischer Mittelteil
- 3: Bügel
- 4: Schwenkverbindung
- 5: Biegelinie
- 6: Klebelasche
- 7: Biegezone
- 8: Filmscharnier
- 9a: erster Scharnierteil
- 9b: zweiter Scharnierteil
- 10: Knick
- 11: Versteifungsknick
- 12: Schlitz
- 13: Wulst
- 14: Ausnehmung
- 15: Metallbügel
- 16: Spalt
- 17: Überlappung
- 18: elastische Dichtungen
- 19: starres Element
- 20: Gelenk
- 21: elastisches Band
- 22: Längsaussteifungen
- 23: verdickte Bereiche

## Patentansprüche

1. Brille (1) mit zwei Bügeln (3), die jeweils über eine Schwenkverbindung (4) an einem in Gebrauchslage das Sichtfeld bedeckenden, optischen Mittelteil (2) angelenkt sind und von einem Lagerungszustand, in dem die Bügel (3) am optischen Mittelteil (2) angelegt sind, in einen Gebrauchszustand, in dem die Bügel (3) vom Mittelteil (2) ausgeklappt sind, schwenkbar sind, wobei der optische Mittelteil (2) aus einem biegeelastischen Material gefertigt ist, **dadurch gekennzeichnet, dass** die beiden Bügel (3) jeweils über zumindest eine gekrümmte Schwenkachse der Schwenkverbindung (4) oder jeweils über zumindest zwei quer zueinander angeordnete, geradlinige Schwenkachsen der Schwenkverbindung (4) am Mittelteil (2) angelenkt sind, wobei der aus einem biegeelastischen Material hergestellte optische Mittelteil (2) beim Ausschwenken der Bügel (3) einen vom Schwenkwinkel der Bügel (3) abhängigen und mit zunehmendem Schwenkwinkel zunehmend gewölbten Zustand einnimmt.

2. Brille (1) nach Anspruch 1, **dadurch gekennzeichnet, dass** im optischen Mittelteil (2) durch geeignete Wahl der Schwenkachsen der Schwenkverbindung (4) und der Biegeelastizität des optischen Mittelteils (2) bei aufgeklappten Bügeln (3) unterschiedlich starke Wölbungen des Mittelteils (2) verwirklicht sind.

3. Brille (1) nach Anspruch 1 oder 2, **dadurch gekennzeichnet, dass** es sich bei der Schwenkverbindung (4) um zumindest eine Biegelinie (5) oder Biegezone (7) handelt.

4. Brille (1) nach Anspruch 3, **dadurch gekennzeichnet, dass** durch Verwendung unterschiedlicher Kunststoffmaterialien oder unterschiedlicher Materialstärken die Biegeelastizität für den optischen Mittelteil (2), die Biegezone (7) und den Bügel (3) variiert.

5. Brille (1) nach einem der Ansprüche 1 bis 4, **dadurch gekennzeichnet, dass** es sich bei der Schwenkverbindung (4) um ein Filmscharnier (8) handelt.

6. Brille (1) nach Anspruch 5, **dadurch gekennzeichnet, dass** das Filmscharnier (8) zwei parallele Biegelinien (5) aufweist, zwischen denen das Filmscharnier (8) einen Wulst (13) ausbildet.

7. Brille (1) nach einem der Ansprüche 1 bis 6, **dadurch gekennzeichnet, dass** der Mittelteil (2) zumindest einen Knick (10) aufweist, der symmetrisch und rechtwinkelig zu einer in eine Querrichtung des optischen Mittelteils (2) verlaufenden Symmetrieachse (S) angeordnet ist.

8. Brille (1) nach einem der Ansprüche 1 bis 7, **dadurch gekennzeichnet, dass** die Bügel (3) jeweils zumindest einen in Längsrichtung des Bügels (3) verlaufenden Versteifungsknick (11) aufweisen.

9. Brille (1) nach einem der Ansprüche 1 bis 8, **dadurch gekennzeichnet, dass** der Mittelteil (2) zumindest eine Längsaussteifung (22) aufweist, die symmetrisch und rechtwinkelig zu einer in eine Querrichtung des optischen Mittelteils (2) verlaufenden Symmetrieachse (S) angeordnet ist.

10. Brille (1) nach einem der Ansprüche 1 bis 9, **dadurch gekennzeichnet, dass** die Bügel (3) jeweils zumindest eine in Längsrichtung des Bügels (3) verlaufende Längsaussteifung (22) aufweisen.

11. Brille (1) nach einem der Ansprüche 1 bis 10, **dadurch gekennzeichnet, dass** die Bügel (3) jeweils eine Ausnehmung (14) zur Aufnahme des jeweils anderen Bügels (3) im Lagerungszustand aufweisen.

12. Brille (1) nach einem der Ansprüche 1 bis 11, **dadurch gekennzeichnet, dass** der optische Mittelteil (2) über den Bügel (3) geringfügig hinausragt.

13. Brille (1) nach einem der Ansprüche 1 bis 11, **dadurch gekennzeichnet, dass** der Bügel (3) über den optischen Mittelteil (2) geringfügig hinausragt.

14. Brille (1) nach einem der Ansprüche 1 bis 13, **dadurch gekennzeichnet, dass** der Bügel (3) und/oder der optische Mittelteil (2) im Bereich der Schwenkverbindung (4) eine elastische Dichtung aufweist.

15. Brille (1) nach einem der Ansprüche 1 bis 14, **dadurch gekennzeichnet, dass** die Schwenkverbindung (4) als Biegezone (7) ausgeführt ist, die den optischen Mittelteil (2) mit dem jeweiligen Bügel (3) verbindet, wobei der Bügel (3) zumindest einen Abschnitt aus einem Material mit geringerer Biegeelastizität aufweist als die Biegezone (7).

## Claims

1. Eyeglasses (1) having two temples (3) which are each hinged via a hinge connection (4) to an optical central part (2) covering the field of vision in the position of use and can be pivoted from a storage state, in which the temples (3) are hinged to the optical central part (2), into a state of use, in which the temples (3) are folded out from the central part (2), wherein the optical central part (2) is made from a flexurally elastic material, **characterized in that** the two temples (3) are hinged in each case to the central part (2) via at least one curved pivot axis of the hinge connection (4) or in each case via at least two rectilinear pivot axes of the hinge connection (4) arranged transversely with respect to one another, wherein the optical central part (2), which is made of a flexurally elastic material, assumes, when the temples (3) are pivoted out, a state which is dependent on the pivot angle of the temples (3) and becomes increasingly curved as the pivot angle increases.

2. Eyeglasses (1) according to claim 1, **characterized in that** different degrees of curvatures of the central part (2) are realized in the optical central part (2) by suitable selection of the pivot axes of the hinge connection (4) and the bending elasticity of the optical central part (2) when the temples (3) are opened up.

3. Eyeglasses (1) according to claim 1 or 2, **characterized in that** the hinge connection (4) is at least one bending line (5) or bending zone (7).

4. Eyeglasses (1) according to claim 3, **characterized in that** by using different plastic materials or different material thicknesses, the bending elasticity for the optical central part (2), the bending zone (7) and the temple (3) varies.

5. Eyeglasses (1) according to one of claims 1 to 4, **characterized in that** the hinge connection (4) is a film hinge (8).

6. Eyeglasses (1) according to claim 5, **characterized in that** the film hinge (8) has two parallel bending lines (5) between which the film hinge (8) forms a bead (13).

7. Eyeglasses (1) according to one of claims 1 to 6, **characterized in that** the central part (2) has at least one bend (10) arranged symmetrically and at right angles to an axis of symmetry (S) extending in a transverse direction of the optical central part (2).

8. Eyeglasses (1) according to one of claims 1 to 7, **characterized in that** the temples (3) each have at least one stiffening bend (11) extending in the longitudinal direction of the temple (3).

9. Eyeglasses (1) according to one of claims 1 to 8, **characterized in that** the central part (2) comprises at least one longitudinal stiffener (22) arranged symmetrically and at right angles to an axis of symmetry (S) extending in a transverse direction of the optical central part (2).

10. Eyeglasses (1) according to one of claims 1 to 9, **characterized in that** the temples (3) each have at least one longitudinal stiffener (22) extending in the longitudinal direction of the temple (3).

11. Eyeglasses (1) according to one of claims 1 to 10, **characterized in that** the temples (3) each have a recess (14) for accommodating the respective other temple (3) in the storage state.

12. Eyeglasses (1) according to one of claims 1 to 11, **characterized in that** the optical central part (2) projects slightly beyond the temple (3).

13. Eyeglasses (1) according to one of claims 1 to 11, **characterized in that** the temple (3) projects slightly beyond the optical central part (2).

14. Eyeglasses (1) according to one of claims 1 to 13, **characterized in that** the temple (3) and/or the optical central part (2) has an elastic seal in the region of the hinge connection (4).

15. Eyeglasses (1) according to one of claims 1 to 14, **characterized in that** the hinge connection (4) is designed as a bending zone (7) which connects the optical central part (2) to the respective temple (3), wherein the temple (3) has at least one section made of a material with lower bending elasticity than the bending zone (7).

## Revendications

1. Lunettes (1) dotée de deux branches (3) qui sont chacune articulées, par l'intermédiaire d'une liaison pivotante (4), sur une partie centrale optique (2) couvrant le champ de vision en position d'utilisation et qui peuvent être pivotées d'un état de rangement, dans lequel les branches (3) sont placées contre la partie centrale optique (2), à un état d'utilisation, dans lequel les branches (3) sont dépliées de la partie centrale (2), la partie centrale optique (2) étant constituée d'un matériau élastique en flexion, **caractérisées en ce que** les deux branches (3) sont chacune articulées sur la partie centrale (2) par l'intermédiaire d'au moins un axe de pivotement curviligne de la liaison pivotante (4) ou par l'intermédiaire d'au moins deux axes de pivotement rectilignes, disposés transversalement l'un par rapport à l'autre, de la liaison pivotante (4), la partie centrale optique (2), qui est réalisée en un matériau élastique en flexion, prenant, lors du pivotement vers l'extérieur des branches (3), un état qui dépend de l'angle de pivotement des branches (3) et qui est de plus en plus incurvé à mesure que l'angle de pivotement augmente.

2. Lunettes (1) selon la revendication 1, **caractérisées en ce que**, dans la partie centrale optique (2), différentes valeurs de courbure de la partie centrale (2) sont réalisées, lorsque les branches (3) sont déployées, par un choix approprié des axes de pivotement de la liaison pivotante (4) et de l'élasticité en flexion de la partie centrale optique (2).

3. Lunettes (1) selon la revendication 1 ou 2, **caractérisées en ce que** la liaison pivotante (4) est au moins une ligne de pliage (5) ou une zone de pliage (7).

4. Lunettes (1) selon la revendication 3, **caractérisées en ce que** l'utilisation de différentes matières plastiques ou de différentes épaisseurs de matériau permet de faire varier l'élasticité en flexion de la partie centrale optique (2), la zone de pliage (7) et la branche (3).

5. Lunettes (1) selon l'une des revendications 1 à 4, **caractérisées en ce que** la liaison pivotante (4) est une charnière à film (8).

6. Lunettes (1) selon la revendication 5, **caractérisées en ce que** la charnière à film (8) présente deux lignes de pliage parallèles (5) entre lesquelles la charnière à film (8) forme un bourrelet (13).

7. Lunettes (1) selon l'une des revendications 1 à 6, **caractérisées en ce que** la partie centrale (2) présente au moins un pli (10) qui est disposé symétriquement et perpendiculairement à un axe de symétrie (S) s'étendant dans une direction transversale de la partie centrale optique (2).

8. Lunettes (1) selon l'une des revendications 1 à 7, **caractérisées en ce que** les branches (3) présentent chacune au moins un pli de rigidification (11) s'étendant dans la direction longitudinale de la branche (3).

9. Lunettes (1) selon l'une des revendications 1 à 8, **caractérisées en ce que** la partie centrale (2) présente au moins un renforcement longitudinal (22) qui est disposé symétriquement et perpendiculairement à un axe de symétrie (S) s'étendant dans une direction transversale de la partie centrale optique (2).

10. Lunettes (1) selon l'une des revendications 1 à 9, **caractérisées en ce que** les branches (3) présentent chacune au moins un renforcement longitudinal (22) s'étendant dans une direction longitudinale de la branche (3).

11. Lunettes (1) selon l'une des revendications 1 à 10, **caractérisées en ce que** les branches (3) présentent chacune un évidement (14) pour recevoir l'autre branche (3) respective à l'état de rangement.

12. Lunettes (1) selon l'une des revendications 1 à 11, **caractérisées en ce que** la partie centrale optique (2) dépasse légèrement de la branche (3).

13. Lunettes (1) selon l'une des revendications 1 à 11, **caractérisées en ce que** la branche (3) dépasse légèrement de la partie centrale optique (2).

14. Lunettes (1) selon l'une des revendications 1 à 13, **caractérisées en ce que** la branche (3) et/ou la partie centrale optique (2) présentent un joint élastique dans la zone de la liaison pivotante (4).

15. Lunettes (1) selon l'une des revendications 1 à 14, **caractérisées en ce que** la liaison pivotante (4) est réalisée sous la forme d'une zone de pliage (7) qui relie la partie centrale optique (2) à la branche respective (3), la branche (3) présentant au moins une section constituée d'un matériau ayant une élasticité en flexion plus faible que la zone de pliage (7).
